# EUROPEAN PATENT SPECIFICATION

(11) **EP 3 136 399 B1**
(45) Date of publication and mention of the grant of the patent: **30.10.2019**
(21) Application number: 15783904.4
(22) Date of filing: 08.04.2015
(51) Int. Cl.: G12B 5/00, H02N 2/02, H02N 2/00

(54) **PRECISION ACTUATING DEVICE**
PRÄZISIONSBETÄTIGUNGSVORRICHTUNG
DISPOSITIF D'ACTIONNEMENT DE PRÉCISION

(30) Priority: 23.04.2014 CN 201410165949
(43) Date of publication of application: 01.03.2017
(73) Proprietor: Institute Of Physics Chinese Academy Of Sciences, Beijing 100190 (CN)
(72) Inventor: WU, Rongting, Beijing 100190 (CN); HUAN, Qing, Beijing 100190 (CN); YAN, Linghao, Beijing 100190 (CN); REN, Junhai, Beijing 100190 (CN); WU, Zebin, Beijing 100190 (CN); GAO, Hongjun, Beijing 100190 (CN)
(74) Representative: 2K Patentanwälte Blasberg Kewitz & Reichel
(86) International application number: PCT/CN2015/076109
(87) International publication number: WO 2015/161740

(56) References cited:
- EP-A1- 0 499 149
- EP-A1- 1 879 063
- CN-A- 1 921 026
- CN-A- 102 623 070
- CN-A- 103 225 728
- DE-U1- 29 907 533
- JP-A- S6 025 284
- US-A- 4 772 109
- US-A1- 2005 259 155
- US-A1- 2010 301 710

## Description

### Field of the Invention

The present invention relates to the field of precision actuation technology, and in particular, to a precision actuating device.

### Background of the Invention

Precision actuation refers to a technology that controls a target to achieve motion (movement or rotation) at a micro-nano scale along a specific direction, and is widely applied as a core technology in the fields of surface analysis, micro-nano machining, optical adjustment, cell manipulation and the like. A precision actuating mechanism has developed, in two development stages, from the initial mechanical driving type, such as a lever type, a differential screw type, a differential spring type and the like, to the present stepper motor driving type, such as a lice crawling type, a worm crawling type, an inertial sliding type and the like. The relatively mature precision actuating mechanism at present is generally achieved by a piezoelectric ceramic stepper motor.

A precision actuating mechanism with multiple degrees of freedom can simultaneously achieve movement or rotation control at the micro-nano scale simultaneously at multiple degrees of freedom. For example, a two-dimensional precision moving mechanism can accurately control the positioning to a target position on a two-dimensional plane, and a three-dimensional precision rotating mechanism can accurately control the positioning to a target angle in a three-dimensional space, etc.

The existing precision actuating mechanism with multiple degrees of freedom, such as the two-dimensional precision moving mechanism, often has the shortcomings of a large volume and a small movement range. This not only reduces the overall stability of the precision actuating mechanism with multiple degrees of freedom, but also greatly limits its application in the fields of surface analysis, micro-nano machining, optical adjustment, cell manipulation, etc.

In addition, in the existing precision actuating mechanism, a driving component and the precision moving mechanism are generally fixed together by a magnetic force, which greatly limits the application of the precision actuating device in a magnetic field environment.

JP S60 25284 A discloses a precision actuating device for achieving precision actuation in at least two directions, comprising a first moving component having an installation space formed therein, wherein the first moving component has an upper surface and an inner side face, the installation space is recessed from the upper surface towards the interior of the first moving component and is open towards the upper surface, and the periphery of the installation space is defined by the inner side face. The precision actuating device further comprises a first precision driving mechanism in transmission connection with the first moving component, wherein the first precision driving mechanism is used for driving the first moving component to move along a first direction; and a second moving component and a second precision driving mechanism, which are arranged and held within the installation space so as to be able to move along the first direction together with the first moving component, wherein the second precision driving mechanism is in transmission connection with the second moving component and is used for driving the second moving component to move in the installation space along a second direction that is different from the first direction.

EP 0 499 149 A1 discloses a driving apparatus for driving an object comprises a pair of piezoelectric elements, one of them being arranged on the one side of the object while the other of them on the other side of the object, and the respective electrode arrangement directions of the pair of piezoelectric elements being substantailly identical to each other, and a control circuit which applies a predetermined voltage across the outer electrodes of the pair of piezoelectric elements respectively, gives an equipotential to the inner electrodes thereof, and causes the pair of piezoelectric elements to drive the object by varying the value of the potential given to the inner electrodes. Hence, the increased amount of a voltage applied to one piezoelectric element is exactly identical to the decreased amount for the other so as to make the extended and contracted amounts of the piezoelectric elements on both sides of the object the same. Consequently, no useless stress is given to the piezoelectric elements for the prevention of the deterioration of the elements to implement a precise fine driving over a long period.

US 2005 / 259 155 A1 discloses a driving controller being adapted for controlling driving of a plurality of driving units physically connected with one another, at least one of which includes a driving member frictionally engaged with a driven member. It is detected whether the driven member is being driven at a predetermined time. The unit including the driving member and another driving unit are driven at a predetermined timing when the detecting circuit detects the driven member is not driven at the predetermined time. The driven member and the driving member can be easily released from an adhered state.

### Summary of the Invention

One object of the present invention is to provide a precision actuating device. The structural design of the precision actuating device of the present invention is more compact, and the precision actuating device is small in occupation area and large in movement range.

According to one aspect of the present invention, provided is a precision actuating device used for achieving precision actuation in at least two directions, including: a first moving component having an installation space formed therein, wherein the first moving component has an upper surface and an inner side face, the installation space is recessed from the upper surface towards the interior of the first moving component and is open towards the upper surface, and the periphery of the installation space is defined by the inner side face; a first precision driving mechanism in transmission connection with the first moving component, wherein the first precision driving mechanism is used for driving the first moving component to move along a first direction; and a second moving component and a second precision driving mechanism, which are arranged and held within the installation space so as to be able to move along the first direction together with the first moving component, wherein the second precision driving mechanism is in transmission connection with the second moving component and is used for driving the second moving component to move in the installation space along a second direction that is different from the first direction. Further, a guiding and limiting structure is formed between the first precision driving mechanism and the first moving component, and/or, between the second precision driving mechanism and the second moving component, for guiding the first and/or second moving component to be movable only along the corresponding first direction and/or second direction relative to the corresponding first and/or second precision driving mechanism; and wherein the guiding and limiting structure comprises:
a guide groove; and a slide block used for cooperation with the guide groove and arranged in the guide groove; and wherein the first and/or second precision driving mechanism is provided with one of the guide groove and the slide block, and the first and/or second moving component is provided with the other of the guide groove and the slide block.

Further, the first moving component is formed into a flat block and is substantially located in an extension space formed by an extension plane with a thickness, wherein the movement of the first moving component along the first direction is located in the extension space;
preferably, the second moving component is formed into a flat block and substantially extends in the extension space, wherein the motion of the second moving component along the second direction is located in the extension space; and
further preferably, the first precision driving mechanism and the second precision driving mechanism are located in the extension space.

Further, the first direction is a first linear direction; and the second direction is a second linear direction that is in a same plane with the first linear direction but is perpendicular to the first linear direction, or the second direction is a rotation direction that rotates in the extension space about a rotation axis perpendicular to the extension plane.

Preferably, the first and/or second moving component is movably supported only by the corresponding first and/or second precision driving mechanism by means of the guiding and limiting structure.

Further, the guide groove or the slide block formed at the first and/or second precision driving mechanism is also formed as an actuating head of the first and/or second precision driving mechanism for actuating the corresponding first and/or the second moving component.

Further, the precision actuating device further includes an elastic member used for generating an elastic force to press the first precision driving mechanism against the first moving component.

Further, the second precision driving mechanism is installed and held at the inner side face of the first moving component;
further, the installation space includes an installation groove formed in the inner side face and used for accommodating and holding the second precision driving mechanism; and the installation groove is open in a direction away from the inner side face, and a part of the second precision driving mechanism extends out of the installation groove to hold the second moving component.

Further preferably, a part of the installation groove is open in a direction facing to the upper surface of the first moving component.

The second moving component along one direction is integrated in the first moving component along another direction to ensure a more compact structure, in this way, the volume of the entire precision actuating device can also be greatly reduced, the two-direction movement range of the precision actuating device is enlarged, and the stability and the integrity of the precision actuating device are improved.

According to the following detailed description of specific embodiments of the present invention in conjunction with drawings, those skilled in the art will better understand the aforementioned and other objects, advantages and features of the present invention.

### Brief Description of the Drawings

Some specific embodiments of the present invention will be described below in detail in an exemplary rather than restrictive manner with reference to the drawings. Identical reference signs in the drawings represent identical or similar components or parts. Those skilled in the art should understand that these drawings are not necessarily drawn to scale. In the drawings:
Fig. 1 is a front view of a precision actuating device according to one embodiment of the present invention;
Fig. 2 is a side view of the precision actuating device shown in Fig. 1;
Fig. 3 is a perspective view of the precision actuating device shown in Fig. 1;
Fig. 4 is a front view of a precision actuating device according to another embodiment of the present invention;
Fig. 5 is a front view of a precision actuating device according to another embodiment of the present invention;
Fig. 6 is a perspective view of a focused ion beam (FIB) etching system according to another embodiment of the present invention.

### Detailed Description of the Embodiments

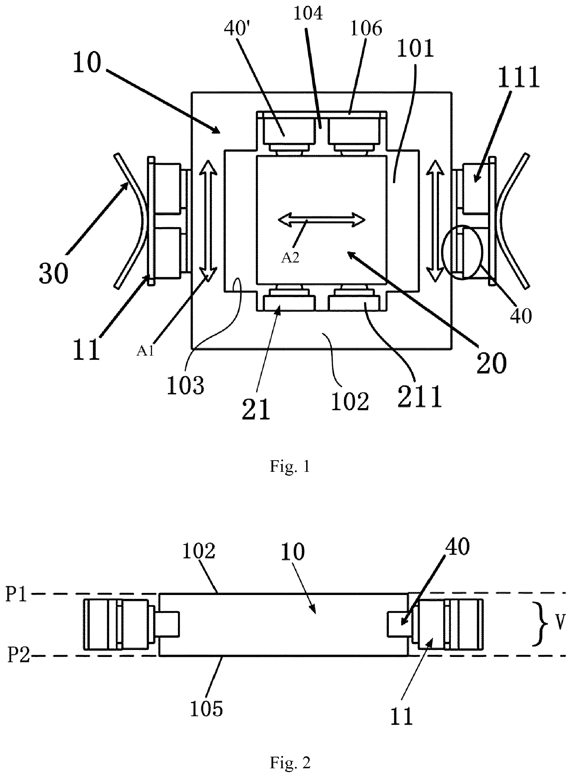

Figs. 1 to 3 show schematic diagrams of a precision actuating device according to one embodiment of the present invention. The precision actuating device of the embodiment can be used in the fields of surface analysis, micro-nano machining, optical adjustment, cell manipulation, etc. Only core components of the precision actuating device are shown in Fig. 1, and an external shell and a circuit line and the like thereof are not shown.

The precision actuating device in the embodiment may achieve precision actuation in two directions. The precision actuating device may be provided with a first moving component 10, a first precision driving mechanism 11, a second moving component 20 and a second precision driving mechanism 21. The first moving component 10 and the second moving component 20 respectively carry out precision movement in two directions. An installation space 101 is formed in the first moving component 10. The first moving component 10 has an upper surface 102, a lower surface 105 and an inner side face 103, the installation space 101 is recessed from the upper surface 102 into the interior of the first moving component 10 towards the lower surface 105 and is open towards the upper surface 102, and the periphery of the installation space 101 is defined by the inner side face 103. In the embodiment shown in Fig. 1, the installation space 101 penetrates through the entire thickness of the first moving component 10 to form a through space along the thickness direction of the first moving component 10; and in other embodiments, the installation space 101 may also extend downwards along a part of thickness of the first moving component 10 from the upper surface 102 of the first moving component 10 so that the installation space is formed like an interior recess.

The first precision driving mechanism 11 is in transmission connection with the first moving component 10, and the first precision driving mechanism 11 is used for driving the first moving component 10 to move along a first direction A1. In Fig. 1, the first direction A1 may be a linear direction along the vertical direction of the paper sheet of Fig. 1.

The second moving component 20 and the second precision driving mechanism 21 are both arranged and held within the installation space 101. The second moving component 20 and the second precision driving mechanism 21 can move along the first direction A1 together with the first moving component 10. The second moving component 20 and the second precision driving mechanism 21 being held within the installation space 101 may be understood in such a manner that the second moving component 20 and the second precision driving mechanism 21 are integrally fixed in the installation space 101 through installation and the position state thereof are kept, however, as mentioned below, such a holding allows relative motion between the second moving component 20 and the second precision driving mechanism 21. The second precision driving mechanism 21 is in transmission connection with the second moving component 20, and the second precision driving mechanism 21 is used for driving the second moving component 20 to move in the installation space 101 along a second direction A2 that is different from the first direction A1. As shown in Fig. 1, the first direction A1 may be a first linear direction, the second direction A2 is a second linear direction perpendicular to the first linear direction, and the second direction A2 may be a linear direction along the transverse direction or the horizontal direction of the paper sheet of Fig. 1.

The first precision moving component 10 and the second precision moving component 20 moving in two directions are integrated in the aforementioned manner, so that the overall structure of the precision actuating device is more compact, the volume thereof is effectively reduced, and also a larger movement range in the two directions is guaranteed.

The first moving component 10 may be formed into a flat block and is substantially located in an extension space formed by an extension plane with a certain thickness. In the present embodiment, the first moving component 10 is generally a flat cube, and in this case, the extension space V refers to a space between a plane PI where the upper surface 102 of the first moving component 10 is located and a plane P2 wherein the lower surface 105 is located, and has a thickness smaller than the width of the first moving component 10. The motion of the first moving component 10 along the first direction A1 is embodied in Fig. 2 as movement in the direction perpendicular to the paper sheet of Fig. 2, which is located in the extension space V. In order to match the volume of the first moving component 10, the second moving component 20 is also formed into a flat block and substantially extends in the extension space V. Further, the motion of the second moving component 20 along the second direction A2 is also located in the extension space V. In addition, to further reduce the volume of the precision actuating device, the first precision driving mechanism 11 and the second precision driving mechanism 21 may also be located in the extension space V. In this way, as the precision actuating device is overall limited in the extension space V, the precision actuating device is generally flat like, for example, a flat plate, which is beneficial to reduce the volume of the precision actuating device, and is suitable for more application occasions or fields.

As shown in Fig. 1, by means of guiding and limiting structures 40 and 40', the precision actuating device of the embodiment defines the motion directions, namely the first direction A1 and the second direction A2, of the first moving component 10 and the second moving component 20. The guiding and limiting structure 40 formed between the first precision driving mechanism 11 and the first moving component 10 is seen more clearly in Fig. 2, and the guiding and limiting structure 40 is used for guiding the first moving component 10 to move relative to the corresponding first precision driving mechanism 11 only along the corresponding first direction A1.

In the embodiment, the guiding and limiting structure 40 not only plays a limiting and guiding function, but also is used for supporting the first moving component 10, so that the first moving component 10 is movably held only by the corresponding first precision driving mechanism 11 by means of the guiding and limiting structure 40. The specific structure of the guiding and limiting structure 40 may include a guide groove 41 and a slide block 42, and the slide block 42 is used for fitting with the guide groove 41 and is arranged in the guide groove 41. In other embodiments, the first moving component 10 may be supported in other manners.

Referring to Figs. 2, 3 and 6, the guiding and limiting structure 40 is located between the first moving component 10 and the first precision driving mechanism 11, so the guiding and limiting structure 40 also has a function of transmitting a driving force. In the embodiment, the slide block 42 is formed at the first precision driving mechanism 11, and the guide groove 41 is formed at the first moving component 10. The slide block 42 can also be used as an actuating head of the first precision driving mechanism 11 for actuating the first moving component 10, and thus the guiding and limiting structure 40 can achieve transmission by means of the slide block 42 and the guide groove 41. It should be noted that the positions of the slide block 42 and the guide groove 41 may be exchanged, in some other embodiments, the slide block 42 is located at the first moving component 10, and the guide groove 41 is located at the first precision driving mechanism 11, and the guide groove 41 is used as the actuating head of the first precision driving mechanism 11. Even if the positions are changed, the functions of limiting and guiding, supporting and holding, and transmission driving of the guiding and limiting structure 40 are still the same.

In the embodiment, the guiding and limiting structure 40' between the second moving component 20 and the second precision driving mechanism 21 may be substantially the same as the guiding and limiting structure 40 described above, in order to guide the second moving component 20 to move relative to the corresponding second precision driving mechanism only along the corresponding second direction. Similar to the guiding and limiting structure 40, the guiding and limiting structure 40' not only has the limiting and guiding function, but also has the functions of supporting and holding, and transmission driving mentioned above. In the embodiment, the guide groove is formed at the second moving component 20, and the slide block is formed at the second precision driving mechanism 21. Certainly, the slide block may be formed at the second moving component 20, and the guide groove is formed at the second precision driving mechanism 21.

The first precision driving mechanism 11 may include a plurality of first driving components, for example, four first driving components 111 as shown in Fig. 1, and the plurality of first driving components 111 may be arranged around the periphery of the first moving component 10. The second precision driving mechanism 21 may also include a plurality of second driving components, for example, four second driving components 211 as shown in Fig. 1, and the plurality of second driving components 211 are arranged around the periphery of the second moving component 20.

As shown in Fig. 1, the first moving component 10 has two mutually parallel linear side edges, and the first direction A1 is parallel to the two linear side edges of the first moving component 10. The plurality of first driving components 111 are respectively distributed at two opposite sides of the first moving component 10 along the two linear side edges of the first moving component 10. As shown in Fig. 1, two first driving components 111 are arranged at each of left and right sides of the first moving component 10. The second moving component 20 has two mutually parallel linear side edges, and the second direction A2 is parallel to the two linear side edges of the second moving component 20. The plurality of second driving components 211 are respectively distributed on two opposite sides of the second moving component 20 along the two linear side edges of the second moving component 20. As shown in Fig. 1, two second driving components 211 are arranged at each of upper and lower sides of the second moving component 20.

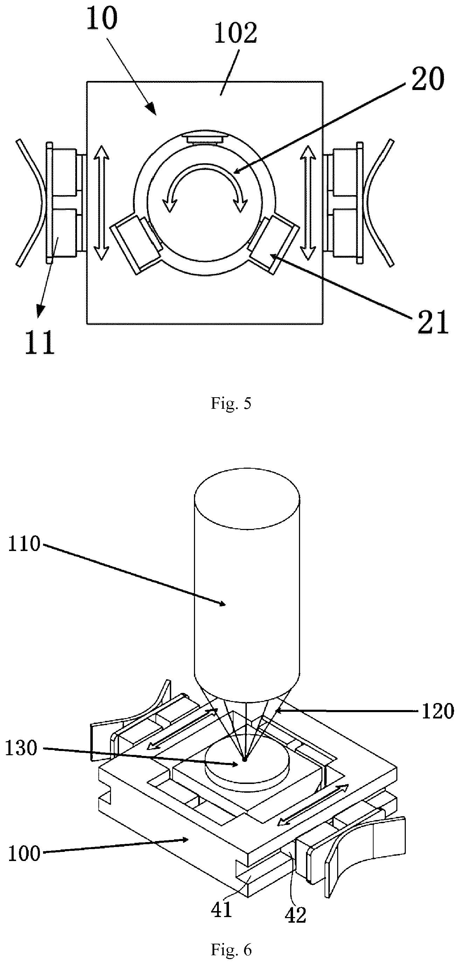

Each of the first driving components 111 and the second driving components 211 may be piezoelectric ceramic motor, which is provided with piezoelectric ceramics for providing driving forces; and each of the first driving components 111 and the second driving components 211 is constructed to generate driving force that is tangent to contact surface between the corresponding first moving component 10 and the second moving component 20. As shown in Fig. 1 and Fig. 6, the first driving components 111 are arranged at the left and right sides of the first moving component 10, but provide the driving forces along the first direction A1 (i.e., up and down direction) by means of the slide blocks 42 serving as the actuating heads. In this way, the arrangement position of the first precision driving mechanism 11 or the first driving components 111 will not limit the movement range of the first moving component 10, which is similar to the second precision driving mechanism 21 or the second driving components 211 and the driven second moving component 20.

An exemplary working mode will be described below with the first driving components 111 as an example. In a working process, usually all first driving components 111 are simultaneously applied with a sawtooth voltage, the rising edge of the sawtooth voltage is very steep, the piezoelectric ceramic in the first driving component 111 will quickly generate a tangential deformation, so that the slide block 42 generates a slight relative movement of about tens of nanometers relative to the first moving component 10 or the guide groove 41 thereof, while the first moving component 10 almost keeps stationary . A falling edge of the sawtooth voltage goes relatively slower, the piezoelectric ceramic in the first driving component 111 will slowly recover to the original shape, at this time, there is no relative sliding between the slide block 42 thereof and the first moving component 10, and thus slide block 42 can drive the first moving component 10 to move a step forward. This process is repeated constantly, thereby achieving that the first driving component 111 drives the first moving component 10 to move. The working mode of the second driving component 211 driving the second moving component 20 to move may be similar to that of the first driving component 111.

The second precision driving mechanism 21 may be installed and held at the inner side face 103 of the first moving component 10. Specifically, the installation space 101 includes an installation groove 104 formed in the inner side face, the installation groove 104 is used for accommodating and holding the second precision driving mechanism 21, and the installation groove 104 is open in a direction away from the inner side face 103 or in other words, in a direction facing to the interior of the installation space 101. A part of the second precision driving mechanism 21, for example, the slide block thereof, protrudes out of the installation groove 104 to hold the second moving component 20, and the other part can be installed in the installation groove 104. In an optional embodiment, only a part of the installation groove 104 may be open in a direction facing to the upper surface 102 of the first moving component 10, namely only an opening for installing the second driving component 211 is reserved, in this way, through the open part, the second driving component 211 can be conveniently installed in the installation groove 104 or detached from the installation groove 104. Certainly, the installation groove 104 may be entirely open in a direction facing to the upper surface 102.

Referring to Figs. 1 to 3, in the embodiment, each of the first moving component 10 and the second moving component 20 is square, four first driving components 111 are provided and are respectively located at two opposite sides corresponding to the two linear side edges of the first moving component 10, four second driving components 211 are provided and are respectively located at two opposite sides corresponding to the two linear side edges of the second moving component 20, and the benefit of arranging the driving components at the two sides is that the driving process can be more stable, and good directionality is kept. It should be noted that, in some other embodiments, a plurality of first driving components 111 may be arranged only at one side corresponding to one linear side edge of the first moving component 10, and pulleys may be arranged at another side corresponding to the other linear side edge. A plurality of second driving components 211 may also be arranged at one side corresponding to one linear side edge of the second moving component 20, pulleys may be arranged at another side corresponding to the other linear side edge., In this way, the function of driving the first moving component 10 and the second moving component 20 can also be accomplished.

Referring to Fig. 1, an exemplary installation process of the second precision driving mechanism 21 and the second moving component 20 is illustrated below according to the direction in Fig. 1.

In the first step, the two second driving components 211 at the lower side of the second moving component 20 are placed in the installation groove 104 at the lower side.

In the second step, the second moving component 20 is placed in the installation space 101 along the direction vertical to the upper surface 102 of the first moving component 10, and the guide groove at the lower side of the second moving component is fit well with the slide blocks of the two second driving components 211 at the lower side via downward movement.

In the third step, the two second driving components 211 at the upper side are placed in the installation groove 104 at the upper side, and the slide blocks thereof are fit with the guide groove at the upper side of the second moving component 20 via downward movement. At this time, a gap is reserved between the second driving components 211 at the upper side and the side face 103 (specifically an upper wall of the installation groove at the upper side) of the installation space 101 due to the downward movement.

In the fourth step, at last, an elastic gasket 106 is installed in the gap formed in the third step to apply an elastic force facing the second moving component 20 to the two second driving components 211 at the upper side, so as to press the second moving component 20 between the four second driving components 211 and accomplish the installation.

In order that the first precision driving mechanism 11 and the first moving component 10 can be held together, so that the precision actuating device can work in extreme environments such as extreme low temperature, strong magnetic field and the like, the precision actuating device of the embodiment is provided with an elastic member 30, one end of the elastic member 30 abuts against one surface of the first driving component 111 away from the first moving component 10, the other end abuts against or is fixed on the inner wall of a shell (not shown in the figures) of the precision actuating device, and the elastic member 30 generates an elastic force for pressing the first precision driving mechanism 11 against the first moving component 10.

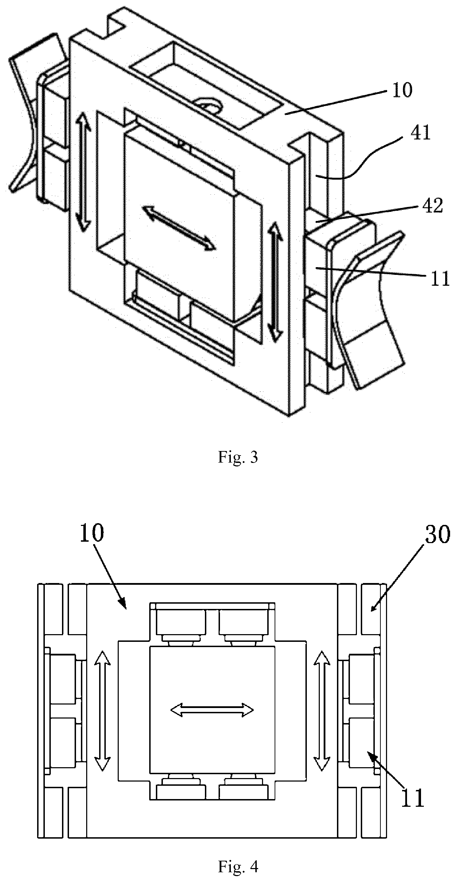

The manner of holding the first precision driving mechanism 11 and the first moving component 10 together is not merely limited to the manner in the aforementioned embodiment, in another embodiment provided by the present invention, referring to Fig. 4, the structure of the precision actuating device of the embodiment is substantially the same as that of the aforementioned embodiment, the only difference lies in that corresponding magnets 30 are respectively arranged at the first precision driving mechanism 11 and the first moving component 10 in the embodiment, and the first precision driving mechanism 11 and the first moving component 10 are adsorbed together by the magnetic attraction of the magnets 30.

Fig. 5 shows another embodiment of the precision actuating device of the present invention, the precision actuating device of the embodiment is substantially the same as that of the aforementioned embodiment, the only difference lies in that the second moving component 20 of the precision actuating device is disc-shaped, and the plurality of second driving components 211 are evenly distributed along the circumference of the second moving component 20. In the embodiment, the second direction for the movement of the second moving component 20 is a rotation direction that rotates about a rotation axis perpendicular to the upper surface 102. The rotation axis of the second moving component 20 may coincide with the central axis of the first moving component 10. In the embodiment, three second driving components 211 are provided and are evenly distributed along the circumferential side face of the second moving component 20, and the three second driving components 211 ensure better guiding, holding and driving stability.

The present invention further provides an embodiment for applying the precision actuating device of the aforementioned embodiment to a focused ion beam (FIB) etching system, as shown in Fig. 6.

Focused ion beam (FIB) etching technology is a technology for etching a micro-nano structure on a two-dimensional surface by means of ion beams to construct a micro-nano device, and has been widely applied to the fields of scientific research, production of semiconductor integrated circuits and the like due to a higher etching resolution. In the technology, in order to etch the micro-nano structure in different areas, a to-be-etched sample 130 needs to be precisely moved. The working principle is as follows: ion beams 120 are generated by an ion beam generation mechanism 110 and are converged into a spot with a diameter of about 10nm on the surface of the to-be-etched sample 130, a micro-nano pit is formed by etching in the area by the impact of the high-energy ion beams 120, and the to-be-etched sample 130 is controlled by a two-dimensional precision actuating device 100 to move along a specific path so as to form a specific pattern on the surface of the to-be-etched sample 130 by etching. Due to the compact design of the precision actuating device provided by the present invention, more degrees of freedom for movement and rotation can be conveniently integrated, thereby better expanding the application range of the focused ion beam etching technology.

It can be understood that precision actuating devices with more dimensions or directions may be achieved according to the present invention. For example, the precision actuating device with two different movement directions (two-dimensional) specifically described in the aforementioned embodiment may be arranged as the whole on a third moving component having a third movement direction, or the third moving component having the third movement direction may be installed on the foregoing second moving component, so as to achieve a three-dimensional precision actuating device. Certainly, precision actuating devices with more dimensions may be achieved according to such a concept.

So far, those skilled in the art should be aware that, although a plurality of exemplary embodiments of the present invention have been shown and described herein in detail, a lot of other variations or modifications conforming to the principle of the present invention can still be directly determined or derived from the contents disclosed in the present invention without departing from the scope of the present invention defined by the appended claims.

## Claims

1. A precision actuating device for achieving precision actuation in at least two directions, comprising:
a first moving component (10) having an installation space (101) formed therein, wherein the first moving component has an upper surface (102) and an inner side face (103), the installation space (101) is recessed from the upper surface (102) towards the interior of the first moving component (10) and is open towards the upper surface (102), and the periphery of the installation space (101) is defined by the inner side face (103);
a first precision driving mechanism (11) in transmission connection with the first moving component (10), wherein the first precision driving mechanism (11) is used for driving the first moving component (10) to move along a first direction; and
a second moving component (20) and a second precision driving mechanism (21), which are arranged and held within the installation space (101) so as to be able to move along the first direction together with the first moving component (10), wherein the second precision driving mechanism (21) is in transmission connection with the second moving component (20) and is used for driving the second moving component (20) to move in the installation space along a second direction that is different from the first direction;
**characterized in that** a guiding and limiting structure (40) is formed between the first precision driving mechanism (11) and the first moving component (10), and/or, between the second precision driving mechanism (21) and the second moving component (20), for guiding the first and/or second moving component to be movable only along the corresponding first direction and/or second direction relative to the corresponding first and/or second precision driving mechanism; and
wherein the guiding and limiting structure (40) comprises:
a guide groove (41); and
a slide block (42) used for cooperation with the guide groove (41) and arranged in the guide groove (41); and
wherein the first and/or second precision driving mechanism is provided with one of the guide groove (41) and the slide block (42), and the first and/or second moving component is provided with the other of the guide groove (41) and the slide block (42).

2. The precision actuating device of claim 1, wherein the first moving component (10) is formed into a flat block and is substantially located in an extension space formed by an extension plane with a thickness, wherein the movement of the first moving component (10) along the first direction is located in the extension space;
preferably, the second moving component (20) is formed into a flat block and substantially extends in the extension space, wherein the movement of the second moving component (20) along the second direction is located in the extension space; and
further preferably, the first precision driving mechanism (11) and the second precision driving mechanism (21) are located in the extension space.

3. The precision actuating device of claim 2, wherein the first direction is a first linear direction; and
the second direction is a second linear direction that is in a same plane with the first linear direction but is perpendicular to the first linear direction, or the second direction is a rotation direction that rotates in the extension space about a rotation axis perpendicular to the extension plane.

4. The precision actuating device of any one of claims 1-3, wherein the first and/or second moving component is movably supported only by the corresponding first and/or second precision driving mechanism by means of the guiding and limiting structure.

5. The precision actuating device of claim 1, wherein the guide groove (41) or the slide block (42) formed at the first and/or second precision driving mechanism is also formed as an actuating head of the first and/or second precision driving mechanism for actuating the corresponding first and/or the second moving component.

6. The precision actuating device of any one of claims 1-5, further comprising an elastic member (30) used for generating an elastic force to press the first precision driving mechanism (11) against the first moving component (10),

7. The precision actuating device of any one of claims 1-6, wherein the second precision driving mechanism (21) is installed and held at the inner side face (103) of the first moving component (10);
preferably, the installation space (101) comprises an installation groove (104) formed in the inner side face, the installation groove (104) is used for accommodating and holding the second precision driving mechanism (21); and the installation groove (104) is open in a direction away from the inner side face (103), and a part of the second precision driving mechanism (21) extends out of the installation groove (104) to hold the second moving component (20); and
further preferably, a part of the installation groove (104) is open in a direction facing to the upper surface (102) of the first moving component (10).

## Patentansprüche

1. Präzisionsbetätigungsvorrichtung zum Erreichen einer Präzisionsbetätigung in mindestens zwei Richtungen, umfassend:
eine erste bewegliche Komponente (10) mit einem darin ausgebildeten Einbauraum (101), wobei die erste bewegliche Komponente eine obere Fläche (102) und eine innere Seitenfläche (103) aufweist, der Einbauraum (101) von der oberen Fläche (102) zum Inneren der ersten beweglichen Komponente (10) hin vertieft ist und zur oberen Fläche (102) hin offen ist, und der Umfang des Einbauraums (101) durch die Innere Seitenfläche (103) definiert ist;
einen ersten Präzisionsantriebsmechanismus (11) in Transmissionsverbindung mit der ersten beweglichen Komponente (10), wobei der erste Präzisionsantriebsmechanismus (11) zum Antreiben der ersten beweglichen Komponente (10) verwendet wird, um sich entlang einer ersten Richtung zu bewegen; und
eine zweite bewegliche Komponente (20) und einen zweiten Präzisionsantriebsmechanismus (21), die innerhalb des Einbauraums (101) angeordnet und gehalten sind, um sich zusammen mit der ersten beweglichen Komponente (10) entlang der ersten Richtung bewegen zu können, wobei der zweite Präzisionsantriebsmechanismus (21) in Transmissionsverbindung mit der zweiten beweglichen Komponente (20) steht und zum Antreiben der zweiten beweglichen Komponente (20) verwendet wird, um sich im Einbauraum entlang einer zweiten Richtung zu bewegen, die sich von der ersten Richtung unterscheidet;
**dadurch gekennzeichnet, dass** eine Führungs- und Begrenzungsstruktur (40) zwischen dem ersten Präzisionsantriebsmechanismus (11) und der ersten Bewegungskomponente (10) und/oder zwischen dem zweiten Präzisionsantriebsmechanismus (21) und der zweiten Bewegungskomponente (20) zum Führen der ersten und/oder zweiten Bewegungskomponente gebildet ist, die nur entlang der entsprechenden ersten Richtung und/oder zweiten Richtung relativ zum entsprechenden ersten und/oder zweiten Präzisionsantriebsmechanismus beweglich ist; und
wobei die Führungs- und Begrenzungsstruktur (40) umfasst:
eine Führungsnut (41); und
einen Gleitblock (42), der zum Zusammenwirken mit der Führungsnut (41) verwendet und in der Führungsnut (41) angeordnet ist; und
wobei der erste und/oder zweite Präzisionsantriebsmechanismus mit einer der Führungsnuten (41) und dem Gleitblock (42) versehen ist, und die erste und/oder zweite bewegliche Komponente mit der anderen der Führungsnuten (41) und dem Gleitblock (42) versehen ist.

2. Präzisionsbetätigungsvorrichtung nach Anspruch 1, wobei die erste bewegliche Komponente (10) zu einem flachen Block geformt ist und sich im Wesentlichen in einem Erweiterungsraum befindet, der durch eine Erweiterungsebene mit einer Mächtigkeit gebildet ist, wobei die Bewegung der ersten beweglichen Komponente (10) entlang der ersten Richtung im Erweiterungsraum angeordnet ist; vorzugsweise die zweite bewegliche Komponente (20) zu einem flachen Block geformt ist und sich im Wesentlichen im Erweiterungsraum erstreckt, wobei die Bewegung der zweiten beweglichen Komponente (20) entlang der zweiten Richtung im Erweiterungsraum angeordnet ist; und
ferner vorzugsweise, wobei der erste Präzisionsantriebsmechanismus (11) und der zweite Präzisionsantriebsmechanismus (21) im Erweiterungsraum angeordnet sind.

3. Präzisionsbetätigungsvorrichtung nach Anspruch 2, wobei die erste Richtung eine erste lineare Richtung ist; und
die zweite Richtung eine zweite lineare Richtung ist, die sich in einer gleichen Ebene wie die erste lineare Richtung befindet, aber senkrecht zur ersten linearen Richtung ist, oder die zweite Richtung eine Drehrichtung ist, die sich im Erweiterungsraum um eine Drehachse senkrecht zur Erweiterungsebene dreht.

4. Präzisionsbetätigungsvorrichtung nach einem der Ansprüche 1-3, wobei die erste und/oder zweite bewegliche Komponente nur durch den entsprechenden ersten und/oder zweiten Präzisionsantriebsmechanismus mittels der Führungs- und Begrenzungsstruktur beweglich gelagert ist.

5. Präzisionsbetätigungsvorrichtung nach Anspruch 1, wobei die Führungsnut (41) oder der am ersten und/oder zweiten Präzisionsantrieb ausgebildete Gleitblock (42) auch als Betätigungskopf des ersten und/oder zweiten Präzisionsantriebsmechanismus zum Betätigen der entsprechenden ersten und/oder zweiten beweglichen Komponente ausgebildet ist.

6. Präzisionsbetätigungsvorrichtung nach einem der Ansprüche 1-5, ferner umfassend ein elastisches Element (30), das zum Erzeugen einer elastischen Kraft verwendet wird, um den ersten Präzisionsantriebsmechanismus (11) gegen die erste bewegliche Komponente (10) zu drücken.

7. Präzisionsbetätigungsvorrichtung nach einem der Ansprüche 1-6, wobei der zweite Präzisionsantriebsmechanismus (21) an der inneren Seitenfläche (103) der ersten beweglichen Komponente (10) installiert und gehalten ist;
vorzugsweise der Einbauraum (101) eine in der inneren Seitenfläche ausgebildete Installationsnut (104) umfasst, die Installationsnut (104) zur Aufnahme und Halterung des zweiten Präzisionsantriebsmechanismus (21) verwendet wird; und die Installationsnut (104) in einer von der inneren Seitenfläche (103) entfernten Richtung offen ist und sich ein Teil des zweiten Präzisionsantriebsmechanismus (21) aus der Installationsnut (104) heraus erstreckt, um die zweite bewegliche Komponente (20) aufzunehmen; und
ferner vorzugsweise ein Teil der Installationsnut (104) in einer Richtung zur oberen Fläche (102) der ersten beweglichen Komponente (10) offen ist.

## Revendications

1. Un dispositif d'actionnement de précision destiné à réaliser un actionnement de précision dans au moins deux directions, comprenant:
un premier composant mobile (10) ayant un espace d'installation (101) formé dans celui-ci, dans lequel le premier composant mobile a une surface supérieure (102) et une face latérale interne (103), l'espace d'installation (101) étant évidé de la surface supérieure (102) vers l'intérieur du premier composant mobile (10) et est ouvert vers la surface supérieure (102), et la périphérie de l'espace d'installation (101) est définie par la face latérale intérieure (103);
un premier mécanisme d'entraînement de précision (11) en liaison de transmission avec le premier composant mobile (10), dans lequel le premier mécanisme d'entraînement de précision (11) est utilisé pour entraîner le premier composant mobile (10) afin qu'il se déplace suivant une première direction; et
un second composant mobile (20) et un second mécanisme d'entraînement de précision (21), qui sont agencés et maintenus dans l'espace d'installation (101) de manière à pouvoir se déplacer dans la première direction avec le premier composant mobile (10), dans lequel le second mécanisme d'entraînement de précision (21) est en liaison de transmission avec le second composant mobile (20) et est utilisé pour entraîner le second composant mobile (20) afin qu'il se déplace dans l'espace d'installation le long d'une seconde direction différente de la première direction ;
**caractérisé en ce qu'**une structure de guidage et de limitation (40) est formée entre le premier mécanisme d'entraînement de précision (11) et le premier composant mobile (10), et/ou entre le second mécanisme d'entraînement de précision (21) et le second composant mobile (20), pour guider le premier et/ou le second composant mobile afin qu'ils ne puissent se déplacer que dans la première direction et/ou la seconde direction par rapport aux premiers et/ou second mécanismes d'entraînement de précision correspondants ; et
dans lequel la structure de guidage et de limitation (40) comprend:
une rainure de guidage (41); et
un bloc coulissant (42) utilisé pour coopérer avec la rainure de guidage (41) et disposé dans la rainure de guidage (41); et
dans lequel le premier et/ou le second mécanisme d'entraînement de précision est pourvu de l'un parmi la rainure de guidage (41) et du bloc coulissant (42), et le premier et/ou le second composant mobile est pourvu de l'autre élément parmi la rainure de guidage (41) et du bloc coulissant (42).

2. Le dispositif d'actionnement de précision de la revendication 1, dans lequel le premier composant mobile (10) est formé en un bloc plat et est sensiblement situé dans un espace d'extension formé par un plan d'extension avec une épaisseur, dans lequel le mouvement du premier composant mobile (10) le long de la première direction est situé dans l'espace d'extension;
de préférence, le second composant mobile (20) est formé en un bloc plat et s'étend sensiblement dans l'espace d'extension, dans lequel le mouvement du second composant mobile (20) le long de la seconde direction est situé dans l'espace d'extension; et
de préférence en outre, le premier mécanisme d'entraînement de précision (11) et le deuxième mécanisme d'entraînement de précision (21) sont situés dans l'espace d'extension.

3. Le dispositif d'actionnement de précision de la revendication 2, dans lequel la première direction est une première direction linéaire; et
la seconde direction est une seconde direction linéaire qui est dans le même plan que la première direction linéaire mais est perpendiculaire à la première direction linéaire, ou la seconde direction est une direction de rotation qui tourne dans l'espace d'extension autour d'un axe de rotation perpendiculaire au plan d'extension.

4. Le dispositif d'actionnement de précision de l'une quelconque des revendications 1 à 3, dans lequel le premier et/ou second composant mobile est soutenu de manière mobile uniquement par le premier et/ou second mécanisme d'entraînement de précision correspondant au moyen de la structure de guidage et de limitation.

5. Le dispositif d'actionnement de précision de la revendication 1, dans lequel la rainure de guidage (41) ou le bloc coulissant (42) formé au niveau du premier et/ou du second mécanisme d'entraînement de précision est également formé en tant que tête d'actionnement du premier et/ou second mécanisme d'entraînement de précision pour actionner le premier et/ou le second composant mobile correspondant.

6. Le dispositif d'actionnement de précision de l'une quelconque des revendications 1 à 5, comprenant en outre un élément élastique (30) utilisé pour générer un effort élastique afin de presser le premier mécanisme d'entraînement de précision (11) contre le premier composant mobile (10).

7. Le dispositif d'actionnement de précision de l'une quelconque des revendications 1 à 6, dans lequel le second mécanisme d'entraînement de précision (21) est installé et maintenu au niveau de la face latérale interne (103) du premier composant mobile (10);
de préférence, l'espace d'installation (101) comprend une rainure d'installation (104) formée dans la face latérale interne, la rainure d'installation (104) est utilisée pour loger et maintenir le second mécanisme d'entraînement de précision (21); et la rainure d'installation (104) est ouverte dans une direction opposée à la face latérale interne (103), et une partie du second mécanisme d'entraînement de précision (21) s'étend hors de la rainure d'installation (104) pour maintenir le second composant mobile (20); et
de manière préférée en outre, une partie de la rainure d'installation (104) est ouverte dans une direction faisant face à la surface supérieure (102) du premier composant mobile (10).
